# EUROPEAN PATENT APPLICATION

(11) **EP 2 719 668 A1**
(43) Date of publication of application: **16.04.2014**
(21) Application number: 12796302.3
(22) Date of filing: 11.06.2012
(51) Int. Cl.: C02F 1/44, C02F 1/28, C02F 1/42

(54) **WATER PURIFICATION CARTRIDGE AND PITCHER-TYPE WATER PURIFIER**

(30) Priority: 10.06.2011 JP 2011130692; 10.06.2011 JP 2011130693; 07.11.2011 JP 2011243618
(71) Applicant: Mitsubishi Rayon Co., Ltd., Tokyo 100-8253 (JP)
(72) Inventor: TAKEDA Hatsumi, Toyohashi-shi Aichi 440-8601 (JP); HORIUCHI Futomitsu, Tokyo 103-0016 (JP); DOI Tsuyoshi, Tokyo 103-0016 (JP); TANEIKE Masahiko, Tokyo 103-0016 (JP)
(74) Representative: HOFFMANN EITLE
(86) International application number: PCT/JP2012/064940
(87) International publication number: WO 2012/169647

(57) **Abstract**

The present invention relates to a water purification cartridge characterized in that it has a membrane side housing for accommodating a membrane water purification unit and a filtering medium side housing for accommodating a filtering medium water purification unit, in which it is configured such that the membrane side housing and the filtering medium side housing are freely removable. The present invention provides a water purification cartridge and a pitcher-type water purifier enabling suppressing a production cost increase even when the membrane water purification unit is arranged closer to the upstream side than the filtering-material water purification unit. In addition, the present invention also provides a conveniently usable water purification cartridge and a pitcher-type water purifier enabling maintenance and management cost to be reduced.

## Description

### TECHNICAL FIELD

The present invention relates to a water purification cartridge for purifying tap water or the like and a pitcher-type water purifier for storing tap water or the like in which the water purification cartridge is used.

The present application claims priority to Japanese Patent Application No. 2011-130692 and No. 2011-130693, which have been filed in Japan on June 10, 2011, and Japanese Patent Application No. 2011-243618, which has been filed in Japan on November 7, 2011, and the content of which is incorporated herein by reference.

### BACKGROUND ART

A pitcher-type water purifier is known for purifying water for treatment such as tap water and storing obtained purified water. For example, there is a pitcher-type water purifier provided with a water purification cartridge between a raw water storage section at upstream side and a purified water storage section at downstream side.

According to such a pitcher-type water purifier, by gravity-fed, raw water from a raw water storage section passes through a water purification section accommodated in a housing of a water purification cartridge to be purified water, which is discharged into a purified water storage section.

Examples of the water purification cartridge include those accommodating a filtering medium water purification unit (filtering medium water purification unit) constituted by filling a filtering medium such an adsorbent at an upstream side of a cylinder shape body and also a membrane water purification unit (de-filter medium) consisting of a hollow fiber membrane or the like at a downstream side of the cylinder-shape body. For the filtering medium water purification unit, an adsorbent consisting of powder or particulate active carbon or the like is frequently used, for example. Further, an air outlet which penetrates in the direction of gravity is formed at the middle part of the filtering medium water purification unit. Air contained in a hollow fiber membrane, which is arranged at the downstream side, is to be discharged via that air outlet (see, for example Patent Document 1 and Patent Document 2).

### CITATION LIST

### PATENT DOCUMENT

Patent Document 1: Japanese Patent No. 4579747
Patent Document 2: Utility Model No. 3107287

### DISCLOSURE OF THE INVENTION

### PROBLEM TO BE SOLVED BY THE INVENTION

Meanwhile, when an ion exchange resin is used instead of an adsorbent, for example, for the filtering medium water purification unit, a pH of water for treatment changes and particles included in the water for treatment pass through the hollow fiber membrane that is arranged at the downstream side, and thus there is concern that the water for treatment may not be fully purified. As a measure for coping with such a situation, it is considered to constitute a water purification cartridge such that a membrane water purification unit consisting of a hollow fiber membrane is arranged at an upstream side.

Further, since the filtering medium water purification unit and membrane water purification unit each have a different service life, it is preferable that the filtering medium water purification unit and membrane water purification unit can be replaced separately. Further, it is also required that, depending on needs of a user, the water purification cartridge is constituted such that selection can be made as to whether or not the filtering medium water purification unit and membrane water purification unit are used in combination and a conveniently usable pitcher-type water purifier is to be provided.

However, according to the embodiments described above, when a hollow fiber membrane is arranged at an upstream side in the cylinder shape body which constitutes the water purification cartridge, it is necessary to form an air outlet penetrating in the direction of gravity at the middle part of the membrane water purification unit to discharge the air contained in the filtering medium water purification unit. In other words, it is necessary that the hollow fiber membrane is formed in an approximately cylinder shape and an air outlet is formed for penetrating in the direction of gravity at the middle part or so in a diameter direction. Thus, there is a problem that forming a hollow fiber membrane in an approximately cylinder shape is difficult and production cost increases.

Further, because a user cannot choose as to whether or not the filtering medium water purification unit and membrane water purification unit are used in combination, there is also a problem that it is difficult to use a pitcher-type water purifier.

Further, according to the techniques of the related art described above, since the filtering medium water purification unit and the membrane water purification unit are accommodated in a single cylinder shape body, it is impossible to use the filtering medium water purification unit and the membrane water purification unit separately. For such reasons, it becomes necessary to replace both of the filtering medium water purification unit and the membrane water purification unit depending on service life of any one of them, and thus there is a problem that cost relating to maintenance and management increases.

The invention is achieved in view of the above circumstances, and it is to provide a water purification cartridge and a pitcher-type water purifier enabling suppressing the production cost increase even when the membrane water purification unit is arranged closer to the upstream side than the filtering medium water purification unit.

The invention also provides a conveniently usable water purification cartridge and a pitcher-type water purifier enabling reducing the maintenance and management cost.

### MEANS FOR SOLVING PROBLEM

The invention includes the following embodiments.
(1) A water purification cartridge having a membrane side housing for accommodating a membrane water purification unit and a filtering medium side housing for accommodating a filtering medium water purification unit, in which the water purification cartridge is configured such that the membrane side housing and the filtering medium side housing are freely removable.
(2) The water purification cartridge described in (1), in which the membrane side housing and the filtering medium side housing are configured such that they are freely removable from a pitcher main body.
(3) The water purification cartridge described in (2), in which the membrane water purification unit and the filtering medium water purification unit are arranged in series and a partitioning plate for partitioning the membrane water purification unit and the filtering medium water purification unit and also for preventing removal of the filtering medium water purification unit from the filtering medium side housing is installed between the membrane water purification unit and the filtering medium water purification unit.
(4) The water purification cartridge described in any one of (1) to (3), in which an ion exchanger is used for the filtering medium water purification unit.
(5) The water purification cartridge described in (4), in which the ion exchanger is an H type cation exchange resin.
(6) The water purification cartridge described in any one of (1) to (5), in which the filtering medium water purification unit is arranged closer to the downstream side than the membrane water purification unit for a case in which a pH of raw water is higher than 8 and a pH of water for treatment by the filtering medium water purification unit is 8 or lower.
(7) The water purification cartridge described in any one of (1) to (3), in which a chelate resin is used for the filtering medium water purification unit.
(8) The water purification cartridge described in any one of (1) to (5) or (7), in which the filtering medium water purification unit is arranged closer to the downstream side than the membrane water purification unit.
(9) The water purification cartridge described in (8), in which at least part of the filtering medium water purification unit is protruded to an outer side than the outermost part in a horizontal direction that is perpendicular to the direction of gravity in the membrane water purification unit.
(10) The water purification cartridge described in (9), in which the membrane water purification unit and the filtering medium water purification unit are arranged in series such that a cross section perpendicular to a length direction has a concentric circle shape.
(11) The water purification cartridge described in any one of (8) to (10), in which the membrane water purification unit is formed in an approximately column shape, the filtering medium water purification unit is arranged on an outer side in the horizontal direction of the membrane water purification unit, and an air outlet is installed between the membrane water purification unit and the filtering medium water purification unit.
(12) The water purification cartridge described in any one of (8) to (11), in which the filtering medium water purification unit is arranged such that it can surround the outer periphery and the bottom part of the membrane water purification unit.
(13) The water purification cartridge described in (12), in which a drain port for discharging water for treatment is installed at the middle in the diameter direction of the filtering medium water purification unit.
(14) The water purification cartridge described in any one of (1) to (13), in which the filtering medium water purification unit has longer service life than the membrane water purification unit.
(15) A pitcher-type water purifier equipped with the water purification cartridge described in any one of (1) to (14).

### EFFECT OF THE INVENTION

The water purification cartridge of the invention is characterized in that it has a membrane side housing for accommodating a membrane water purification unit and a filtering medium side housing for accommodating a filtering medium water purification unit, in which it is configured such that the membrane side housing and the filtering medium side housing are freely removable.

By having such a configuration, each of the filtering medium water purification unit and the membrane water purification unit can be used separately. For such reasons, each of the filtering medium water purification unit and the membrane water purification unit can be replaced separately so that the maintenance and management cost can be reduced.

Further, because a user can choose as to whether or not the filtering medium water purification unit and the membrane water purification unit are used in combination, a conveniently usable water purification cartridge can be provided.

It is characterized to have a configuration that the membrane side housing and the filtering medium side housing are freely removable from the pitcher main body.

By having such a configuration, it is possible for the pitcher main body to be attached selectively with either of the filtering medium water purification unit or the membrane water purification unit, and it is also possible for the pitcher main body to be attached with both of the filtering medium water purification unit and the membrane water purification unit. Accordingly, a more conveniently usable water purification cartridge can be provided.

The water purification cartridge according to the invention is characterized in that the membrane water purification unit and the filtering medium water purification unit are arranged in series, and a partitioning plate for partitioning the membrane water purification unit and the filtering medium water purification unit and also for preventing removal of the filtering medium water purification unit from the filtering medium side housing is installed between the membrane water purification unit and the filtering medium water purification unit.

By having such a configuration, it is possible to prevent incorporation of the filtering medium into the membrane water purification unit during running. Further, even with the water purification cartridge in which the membrane water purification unit and the filtering medium water purification unit are arranged in series, each of the membrane water purification unit and the filtering medium water purification unit can be distributed separately. Accordingly, a conveniently usable water purification cartridge having various specifications can be provided while the maintenance and management cost of the water purification cartridge is kept low.

The water purification cartridge according to the invention is characterized in that an ion exchanger is used for the filtering medium water purification unit.

By having such a configuration, heavy metals can be efficiently removed.

The water purification cartridge according to the invention is characterized in that the ion exchanger is an H type cation exchange resin.

By having such a configuration, a water purification cartridge having excellent adsorbency for heavy metals like lead can be provided.

The water purification cartridge according to the invention is characterized in that, when a pH of raw water is higher than 8 and a pH of water for treatment by the filtering medium water purification unit is 8 or lower, the filtering medium water purification unit is arranged closer to the downstream side than the membrane water purification unit.

By having such a configuration, a pH of water introduced to the filtering medium water purification unit does not become 8 or lower and portion of lead in particle state increases so that more lead particles can be removed from the water for treatment by the membrane water purification unit.

The water purification cartridge according to the invention is characterized in that a chelate resin is used for the filtering medium water purification unit.

By having such a configuration, a specific metal ion can be captured.

The water purification cartridge according to the invention is characterized in that the filtering medium water purification unit is arranged closer to the downstream side than the membrane water purification unit.

The water purification cartridge according to the invention is characterized in that at least part of the filtering medium water purification unit is protruded to an outer side than the outermost part in a horizontal direction that is perpendicular to the direction of gravity in the membrane water purification unit.

By having such a configuration, the outer side of the membrane water purification unit can be set as an air outlet without forming an air outlet penetrating in the direction of gravity of the membrane water purification unit, even when the membrane water purification unit is arranged at the upstream side of the filtering medium water purification unit. Accordingly, it is unnecessary to form the membrane water purification unit in an approximately cylinder shape, and thus the production cost increase can be suppressed.

The water purification cartridge according to the invention is characterized in that the membrane water purification unit and the filtering medium water purification unit are arranged such that a cross section perpendicular to a length direction has a concentric circle shape.

The water purification cartridge according to the present invention is characterized in that the membrane water purification unit is formed in an approximately column shape, the filtering medium water purification unit is arranged on an outer side in the horizontal direction of the membrane water purification unit, and an air outlet is installed between the membrane water purification unit and the filtering medium water purification unit.

By having such a constitution, a space for the vertical direction arrangement of the membrane water purification unit and the filtering medium water purification unit can be reduced. Further, by reducing a space for the vertical direction arrangement, the vertical direction space of the water storage section for storing purified water can be kept large without altering the whole size of the pitcher-type water purifier.

Accordingly, water storage amount until water surface of purified water in the water storage section reaches the water purification cartridge can be increased. In other words, as it is possible to secure sufficient purification rate until water surface of purified water in the water storage section reaches the water purification cartridge, a conveniently usable pitcher-type water purifier can be provided.

Further, as an air outlet is formed between the membrane water purification unit and the filtering medium water purification unit, air present closer to the downstream side than the membrane water purification unit can be surely discharged without forming an air outlet in the membrane water purification unit.

Further, as the membrane water purification unit and the filtering medium water purification unit are arranged in a vertically long direction such that a cross section perpendicular to the length direction of the water purification cartridge has a concentric circle shape, the linear velocity of the filtering medium section increases and the filtering medium is efficiently utilized so that user cost can be reduced. Further, for a case in which a hollow fiber membrane is used for the membrane water purification unit, for example, when a loop shape one is adhered to a container by using a resin and then cut to give a end surface, the elongated shape one yields less portion wasted by cutting even with the same effective membrane area, and thus the cost relating to the water purification cartridge can be reduced.

The water purification cartridge according to the invention is characterized in that the filtering medium water purification unit is arranged such that it can surround the outer periphery and the bottom part of the membrane water purification unit.

By having such a configuration, it becomes possible to secure sufficient purification rate until water surface of purified water reaches the water purification cartridge, and thus a conveniently usable pitcher-type water purifier can be provided.

Further, as an air outlet is formed between the membrane water purification unit and the filtering medium water purification unit, air present closer to the downstream side than the membrane water purification unit can be surely discharged without forming an air outlet in the membrane water purification unit.

Further, as the filtering medium water purification unit is arranged such that it can surround the outer periphery and the bottom part of the membrane water purification unit, the flow path in the filtering medium through which water for treatment passes can be elongated. Accordingly, the filtration performance of the water purification cartridge can be improved and also extended service life of the filtering medium can be obtained.

The water purification cartridge according to the invention is characterized in that a drain port for discharging water for treatment is installed at the middle in the diameter direction of the filtering medium water purification unit.

By having such a configuration, it becomes possible to prevent that the drain port is unnecessarily large, and thus the opening area of the drain port can be kept at a minimum size. Accordingly, it is also possible to prevent the back-contamination via the drain port.

Further, for a case in which a mesh sheet or nonwoven fabric is installed at the drain port, the product cost can be reduced because the opening area of the drain port can be kept at a small size.

Further, compared to a case in which the drain port is arranged near the outer periphery of the filtering medium water purification unit, the filtering medium can be used without any bias.

The water purification cartridge according to the invention is characterized in that the filtering medium water purification unit has longer service life than the membrane water purification unit.

By having such a configuration, for a case in which the service life of the membrane water purification unit is longer than the service life of the filtering medium water purification unit, for example, it is required to replace only the filtering medium water purification unit, and thus the maintenance and management cost of the water purification cartridge can be suppressed.

The pitcher-type water purifier according to the invention is characterized in that it is equipped with the water purification cartridge described in any one of claims 1 to 12.

By having such a configuration, it becomes possible to capture a specific metal ion.

### BRIEF DESCRIPTION OF DRAWINGS

Fig. 1 is a cross-sectional side view partially illustrating the pitcher-type water purifier according to a first embodiment of the invention.
Fig. 2 is an exploded side view illustrating the water purification cartridge according to the first embodiment of the invention.
Fig. 3 is a cross-sectional side view illustrating a part of the water purification cartridge according to the first embodiment of the invention.
Fig. 4 is an exploded side view illustrating the water purification cartridge according to a second embodiment of the invention.
Fig. 5 is a cross-sectional side view partially illustrating the water purification cartridge according to the second embodiment of the invention.
Fig. 6 is a cross-sectional side view illustrating a part of the water purification cartridge according to a third embodiment of the invention.
Fig. 7 is a cross-sectional side view illustrating a part of the water purification cartridge according to a fourth embodiment of the invention.
Fig. 8 is a perspective view illustrating the water purification cartridge according to a fifth embodiment of the invention.

### BEST MODE(S) FOR CARRYING OUT THE INVENTION

### (First Embodiment)

### (Pitcher-type water purifier)

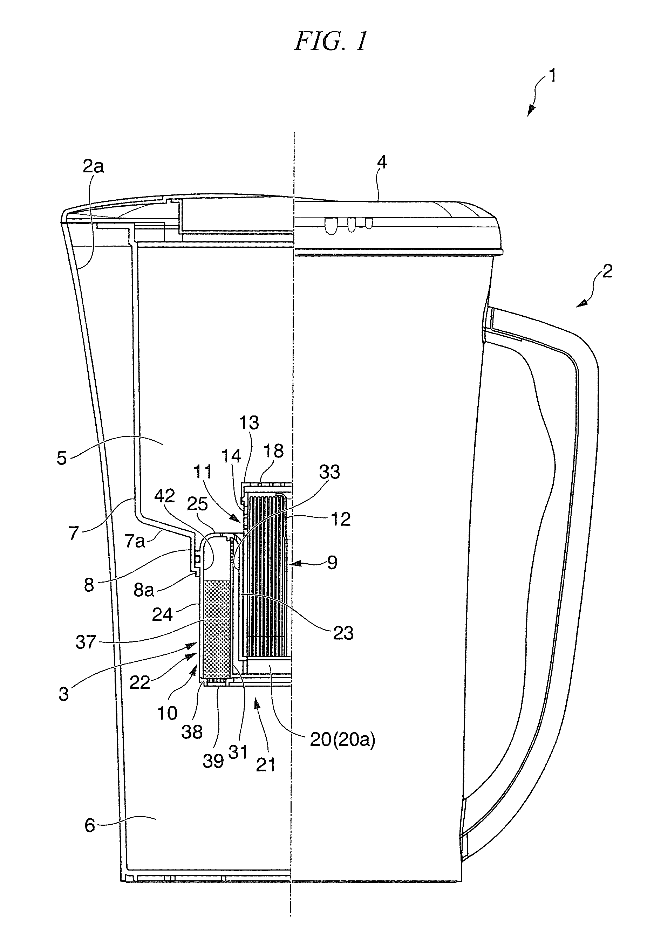

Next, a first embodiment of the invention is explained on the basis of Fig. 1 to Fig. 3.

Fig. 1 is a cross-sectional side view partially illustrating a pitcher-type water purifier 1. Meanwhile, for the explanations given below, there may be a case in which, when the pitcher-type water purifier 1 is placed in a usable state (see, Fig. 1), the direction of gravity along which water falls is expressed as downward direction and the opposite direction is expressed as upward direction.

As illustrated in Fig. 1, the pitcher-type water purifier 1 is to purify water for treatment such as tap water and also to store obtained purified water, and it is equipped with the cylinder-shape pitcher main body 2 having a bottom that is formed to be elongated in vertical direction, the water purification cartridge 3 freely removable from the pitcher main body 2, and the pitcher cover 4 for the liquid tight sealing of the top opening 2a of the pitcher main body 2.

On the peripheral wall of the pitcher main body 2, the handle 2 b is integrally formed from the upper end to the bottom end approximately. Further, the pitcher main body 2 is configured such that the raw water storage section 5 to which water for treatment is supplied and the purifier water storage section 6 for storing purified water are separated by the partitioning section 7. The partitioning section 7 is formed in an approximately cylinder shape with an open top. Further, on the bottom wall 7a of the partitioning section 7, the attachment part 8 in cylinder shape with an open top and an open bottom is installed such that it protrudes to the downward direction. To the attachment part 8, the water purification cartridge 3 is attached.

### (Water purification cartridge)

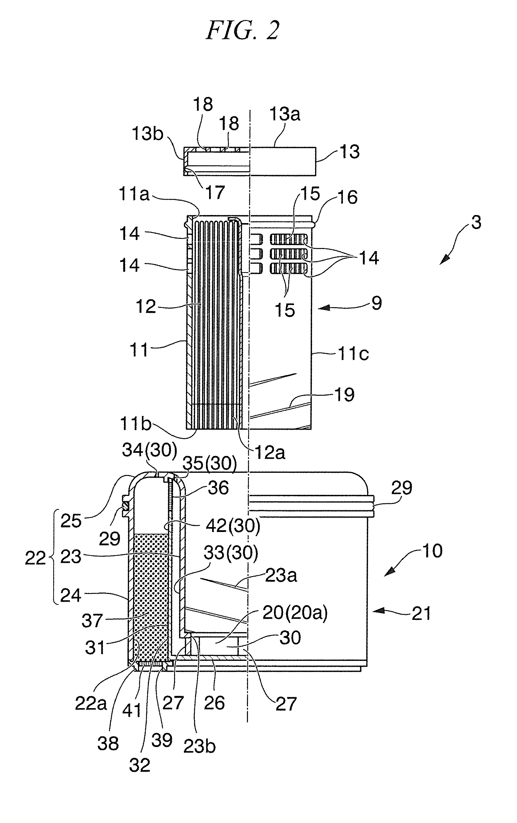

Fig. 2 is an exploded side view of the water purification cartridge 3.

As illustrated in the drawing, the water purification cartridge 3 includes the membrane water purification cartridge 9 and the filtering medium water purification cartridge 10 that is formed to surround the membrane water purification cartridge 9.

In the membrane water purification cartridge 9, the hollow fiber membrane 12 as membrane water purification unit is accommodated in the approximately cylindrical first housing 11 having the opening 11a and 11b at both of top and bottom ends and the top opening 11a is closed by the housing cover 13.

On the peripheral wall 11c of the first housing 11, plural water intake ports 14 are formed on the top part such that they are arranged equidistantly along the peripheral direction and also arranged in three rows along the vertical direction. More specifically, within about 1/3 range from the top in the entire length of the first housing 11, the water intake port 14 is formed. The water intake port 14 is to introduce water for treatment to the first housing 11, and it is closed by the mesh sheet 15.

By installing the mesh sheet 15, water for treatment can be introduced to the first housing 11 while preventing the release of the hollow fiber membrane 12 to an outside through the water intake port 14.

Further, slightly below the periphery of the top opening 11a of the first housing 11, the convex part 16 is formed along the entire periphery. The convex part 16 engages and fits into the housing cover 13 to prevent the release of the housing cover 13.

The housing cover 13 is formed in a shallow cylinder shape having a bottom, and it is attached to close the top opening 11a of the first housing 11 while the bottom wall 13a faces upward. The bottom wall 13a is formed with a plurality of air release holes 18 and it is designed such that air contained in the hollow fiber membrane 12 is released through the air release holes 18.

Further, the peripheral wall 13b of the housing cover 13 is formed such that it can be fitted in the outside of the first housing 11. Further, in the peripheral wall 13b of the housing cover 13, the concave part 17 to be fitted into the convex part 16 is formed along the entire periphery on an area corresponding to the convex part 16 formed on the first housing 11.

Herein, examples of a material for the first housing 11 and the housing cover 13 include such as a resin (ABS resin, polycarbonate, acrylic resin, polypropylene, polystyrene, or the like) or a metal (stainless steel). Further, it is formed such that the rigidity of the housing cover 13 is slightly lower than the rigidity of the first housing 11. By having such a constitution, when the housing cover 13 is attached to the first housing 11, the peripheral wall 13b of the housing cover 13 is elastically deformed in a minor amount toward the outside in the diameter direction. Further, the concave part 17 formed on the peripheral wall 13b of the housing cover 13 is snap-fitted in the convex part 16 of the first housing 11.

The hollow fiber membrane 12 accommodated in the first housing 11 is integrally formed by the potting part 12a that is filled in the end part, while it maintains an opening in a curved state with a U-shape. Further, the hollow fiber membrane 12 is fixed in a state in which the potting part 12a is arranged on the bottom opening 11b of the first housing 11.

Examples of a material for the hollow fiber membrane 12 include such as polyethylene, polypropylene, poly(4-methylpentene-1), polytetrafluoroethylene, polyfluorovinylidene, polystyrene, polysulfone, polyether ketone, or polyether ether ketone.

The potting part 12a is, for example, formed by curing of a thermocurable resin, and examples of the thermocurable resin include such as an epoxy resin, a urethane resin, a silicone resin, or an unsaturated polyester resin.

Meanwhile, the filtering medium water purification cartridge 10 is provided with the approximately cylindrical second housing 21 with a bottom. By fitting the second housing 21 to the attachment part 8 installed in the pitcher main body 2, the water purification cartridge 3 is attached to the attachment part 8.

The peripheral wall part 22 of the second housing 21 is formed in an approximately U-shaped cross section such that it has the opening part 22a in a lower side, and consists of the inner peripheral wall 23, the outer peripheral wall 24, and the end part 25 connecting the top end of the inner peripheral wall 23 with the top end of the outer peripheral wall 24.

The diameter of the inner peripheral wall 23 is set to be almost the same as the outer diameter of the first housing 11 of the membrane water purification cartridge 9. Further, the female screw portion 23a is engraved on the inner peripheral wall 23 and also the male screw portion 19, which can be screw-joined to the female screw portion 23a of the inner peripheral wall 23, is engraved on the peripheral wall 11c of the first housing 11. Accordingly, the first housing 11 is engaged and fixed to the second housing 21 and also the liquid tightness among the second housing 21, the inner peripheral wall 23, and the peripheral wall 11c of the first housing 11 is secured.

In a lower part of the inner peripheral wall 23, the engagement claw 23b is extended in bent state to an inner side in the diameter direction. When the bottom end of the first housing 11 abuts on the engagement claw 23b, the position of the first housing 11 is determined. Herein, in a state in which the first housing 11 is attached to the second housing 21, the water intake port 14 formed in the first housing 11 is exposed from the upper side of the second housing 21. Accordingly, water for treatment in the raw water storage section 5 can be introduced to the first housing 11.

Meanwhile, the non-illustrated screw part, which is engraved on the inner peripheral wall 23, and the male screw portion 19 engraved on the first housing 11 are preferably a tapered screw. Accordingly, the liquid tightness between the inner peripheral wall 23 and the first housing 11 is more certainly secured.

Further, on the bottom wall 26 of the second housing 21, plural columns 27 are installed on an area corresponding to the inner peripheral wall 23, equidistantly in the periphery direction. The plural columns 27 are to form a pre-determined clearance 20 between the bottom wall 26 and the engagement claw 23b of the inner peripheral wall 23. That is, by having the end of the column 27 to abut on the engagement claw 23b, the position of the bottom wall 26 is determined.

Under such a configuration, the clearance 20 is formed between the bottom wall 26 and the membrane water purification cartridge 9 while the first housing 11 is attached to the second housing 21. The clearance 20 functions as the first flow path 20a through which the water for treatment by the membrane water purification cartridge 9 flows.

Herein, examples of a material for the second housing 21 include such as a resin (ABS resin, polycarbonate, acrylic resin, polypropylene, polystyrene, or the like) or a metal (stainless steel). Among these, the material of the second housing 21 is preferably selected such that the rigidity of the second housing 21 is slightly lower than the rigidity of the first housing 11.

That is, for example, when an ABS resin is selected as a material for the first housing 11, it is preferable to select polypropylene as a material for the second housing 21. By having such a constitution, the second housing 21 is elastically deformed in a minor amount at the time of having screw-joining the first housing 11 to the second housing 21, and by using the elastically deformed force, it becomes possible to fix strongly the first housing 11 and the second housing 21.

The outer peripheral wall 24 is a part to be fitted to the attachment part 8 of the pitcher main body 2. Near the end part 25 of the outer peripheral wall 24, the O ring attachment part 28 is formed over the entire periphery, and the O ring 29 is attached thereto. By having the O ring 29, the attachment part 8 and the outer peripheral wall 24 are sealed in a liquid tight manner when the second housing 21 is fitted to the attachment part 8.

Herein, at the periphery of the bottom end of the attachment part 8, the diameter-reduced section 8a which has a reduced diameter with a stepped portion is formed (see, Fig. 1). Further, it is configured such that the O ring attachment part 28, which is formed in the outer peripheral wall 24 of the second housing 21, can abut on the stepped portion of the diameter-reduced section 8a. Accordingly, the vertical direction position of the second housing 21 relative to the attachment part 8 is determined. In a state in which the second housing 21 is attached to the attachment part 8, the lower wall 7a of the partitioning section 7 and the end part 25 constituting the peripheral wall part 22 of the second housing 21 are present on an approximately same flat plane.

Further, between the inner peripheral wall 23 and the outer peripheral wall 24 of the peripheral wall part 22 and also near the inner peripheral wall 23, the partitioning cylinder 31 formed in an approximately cylinder shape is installed. The top end of the partitioning cylinder 31 is connected to the end part 25 of the peripheral wall part 22. Meanwhile, the bottom end of the partitioning cylinder 31 is connected to the bottom wall 26 of the second housing 21. With the partitioning cylinder 31, the inside of the peripheral wall part 22 is partitioned into two rooms. That is, with the partitioning cylinder 31, the outer peripheral wall 24, and the end part 25, the filtering medium accommodating section 32 is formed. Further, with the partitioning cylinder 31, the inner peripheral wall 23, and the end part 25, the second flow path 33 as a flow path for water for treatment is formed. The second flow path 33 communicates with the first flow path 20a, and water for treatment which flows through the first flow path 20a flows into the second flow path 33.

Further, on the end part 25, each of the air release holes 34 and 35 is formed on an area corresponding to the filtering medium accommodating section 32 and an area corresponding to the second flow path 33. Further, on a top part of the partitioning cylinder 31, the passing port 36 is formed, and the filtering medium accommodating section 32 communicates with the second flow path 33 via the passing port 36. Accordingly, water for treatment is introduced to the filtering medium accommodating section 32 via the passing port 36.

Herein, in the filtering medium accommodating section 32, the filtering medium 37 as the filtering medium water purification unit is filled from the opening part 22a of the peripheral wall part 22 to a slightly upper side of the middle in the vertical direction. That is, the filtering medium 37 is arranged such that it can surround the outside in the diameter direction of the hollow fiber membrane 12 of the membrane water purification cartridge 9. In other words, the filtering medium 37 is in a state in which it is protruded to an outer side than the outermost part in horizontal direction that is perpendicular to the direction of gravity of the hollow fiber membrane 12.

Furthermore, the upper side of the area filled with the filtering medium 37 of the filtering medium accommodating section 32 constitutes the air retention section 42. By forming the air retention section 42, water for treatment can be more smoothly introduced to the filtering medium accommodating section 32 via the passing port 36.

As for the filtering medium 37, an adsorbent such as powder or particulate active carbon, zeolite, or molecular sieve is used in the present example. Examples of other adsorbent include a fibrous adsorbent such as fibrous active carbon. It is also possible to us an ion exchanger such as an ion exchange resin or an ion exchange fiber or a chelate resin as the filtering medium 37.

When an ion exchanger is used as the filtering medium 37, heavy metals can be efficiently removed. When an ion exchanger is used as the filtering medium 37, it is preferable to use an H type cation exchange resin having excellent adsorbency for heavy metals like lead. The H type cation exchange resin is preferably used for raw water having a pH of 8 to 9. When the H type cation exchange resin is used as the filtering medium 37, water for treatment by the filtering medium 37 has a pH of 8 or lower and lead is present more in an ion state than a particle state even when a pH of raw water is higher than 8. For such reasons, it may pass through the hollow fiber membrane 12, making it impossible to remove. For such a case, if the filtering medium 37 as the filtering medium water purification unit is arranged closer to the downstream side than the hollow fiber membrane 12 as the membrane water purification unit, the pH is not lowered to lower than 8 and portion of lead in a particle state increases, and thus more lead particles can be removed by the hollow fiber membrane 12. The H type cation exchange resin is preferably used for water with a pH of 3 to 8 after treatment.

Further, when a chelate resin is used as the filtering medium 37, a specific metal ion can be captured. When a chelate resin is used as the filtering medium 37, an iminodiacetic acid type chelate resin capable of efficiently removing heavy metals like lead is preferable.

Further, while the fltering medium 37 is filled, on an area corresponding to the filtering medium accommodating section 32, the cover 38 is formed in the opening part 22a of the peripheral wall part 22, in which the cover 38 has an approximately ring shape when viewed from a plane for closing the filtering medium accommodating section 32.

On the cover 38, the water drain port 39 is installed, and on the water drain port 39, the mesh sheet 41 is formed.

Specifically, on the cover 38, the water drain port 39 is formed in an approximately ring shape along the periphery of the water purification cartridge 3. The drain port 39 is partitioned by eight non-illustrated partitioning plates. However, the number of partitioning plates is not limited to 8. Further, the mesh sheet 41 is installed on the water drain port 39. Accordingly, water for treatment can be discharged from the water drain port 39 to the purified water storage section 6 while preventing the release of the filtering medium 37 to an outside via the water drain port 39.

### (Function of pitcher-type water purifier)

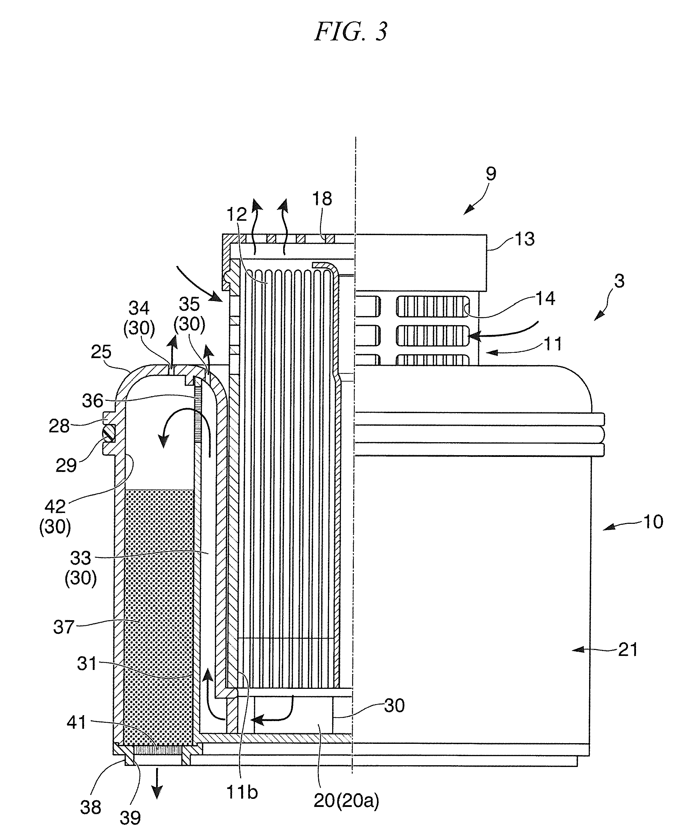

Next, based on Fig. 1 and Fig. 3, the function of the pitcher-type water purifier 1 is explained in more detail.

Fig. 3 is a cross-sectional side view of a part of the water purification cartridge 3.

As illustrated in Fig. 1 and Fig. 3, when water purification is performed by using the pitcher-type water purifier 1, the pitcher cover 4 is detached first and the water purification cartridge 3 is attached to the attachment part 8. After that, water for treatment such as tap water is supplied to the raw water storage section 5 via the top opening 2a.

Water for treatment in the raw water storage section 5 is introduced to the first housing 11 via each water intake port 14 of the membrane water purification cartridge 9 which constitutes the water purification cartridge 3. The water for treatment introduced to the first housing 11 is treated by the hollow fiber membrane 12 and discharged through the bottom opening 11b. At that time, air contained in the hollow fiber membrane 12 is released from the air release hole 18 formed on the housing cover 13.

The water for treatment discharged through the bottom opening 11b of the first housing 11 flows into the first flow path 20a and then flows into the second flow path 33. At that time, the air remained in the first flow path 20a and the second flow path 33 is released to an outside through the air release hole 35 that is formed on the peripheral wall 22 of the second housing 21.

Subsequently, the water for treatment is introduced from the second flow path 33 to the filtering medium accommodating section 32 via the passing port 36. The water for treatment is then treated by the filtering medium 37 accommodated in the filtering medium accommodating section 32. Further, purified water is discharged from the water drain port 39, and stored in the purified water storage section 6. At that time, air contained in the filtering medium 37 is released through the air release hole 34.

As described above, the water purification cartridge 3 has the membrane water purification cartridge 9 having the hollow fiber membrane 12 arranged at an upstream side of the flow of water for treatment and the filtering medium water purification cartridge 10 having the filtering medium 37 arranged at an downstream side. Further, the first flow path 20a as a boundary between the membrane water purification cartridge 9 and the filtering medium water purification cartridge 10 and the air release hole 35 for releasing the air remaining in the first flow path 20a and the second flow path 33 are arranged at an outer side in the diameter direction of the hollow fiber membrane 12. Further, the air release hole 34 for releasing the air contained in the filtering medium 37 which is arranged at a downstream side is also arranged at an outer side in the diameter direction of the hollow fiber membrane 12. In addition, in collaboration with the air release holes 34 and 35, the first flow path 20a, the second flow path 33, and the air retention section 42 function as the air outlet 30 for releasing the air present closer to the downstream side than the membrane water purification cartridge 9.

Subsequently, a method of attaching and removing the water purification cartridge 3 is explained.

First, when the water purification cartridge 3 is attached to the pitcher main body 2, the membrane water purification cartridge 9 and the filtering medium water purification cartridge 10 are assembled in advance to form an integral body. Specifically, the bottom opening 11b of the first housing 11 of the membrane water purification cartridge 9 is arranged to face the second housing 21 of the filtering medium water purification cartridge 10 and the first housing 11 is screw-fixed to the inner peripheral wall 23 of the second housing 21. Then, by screwing it until the bottom end of the first housing 11 abuts onto the engagement claw 23b of the inner peripheral wall 23, a process for assembling the water purification cartridge 3 is completed.

Subsequently, the water purification cartridge 3 is attached to the attachment part 8 of the pitcher main body 2. Specifically, the cover 38 attached to the second housing 21 of the water purification cartridge 3 is arranged to face the top opening 2a of the pitcher main body 2, and the water purification cartridge 3 is inserted from the top opening 2a side toward the attachment part 8. Further, it is pushed until the diameter-reduced section 8a of the attachment part 8 abuts onto the O ring attachment part 28 of the second housing 21.

At that time, the O ring 29 attached to the O ring attachment part 28 is slightly deformed by compression between the O ring attachment part 28 and the attachment part 8 of the pitcher main body 2, and thus liquid tightness between the attachment part 8 and the water purification cartridge 3 is secured. Further, as the restoration force applied on the O ring 29 works as a resistance force, the easy release of the water purification cartridge 3 from the attachment part 8 is prevented. Accordingly, the process of attaching the water purification cartridge 3 to the pitcher main body 2 is completed.

Meanwhile, to remove the water purification cartridge 3 from the pitcher main body 2, a process opposite to the process of attaching the water purification cartridge 3 can be carried out. Specifically, by extruding the water purification cartridge 3 from the lower side toward the upper side, the water purification cartridge 3 can be removed from the attachment part 8. Further, by rotating the first housing 11 in a direction for releasing the first housing 11 from the second housing 21, the second housing 21 and the first housing 11 can be separated from each other.

Thus, according to the first embodiment described above, the filtering medium 37 of the filtering medium water purification cartridge 10 is arranged on an outer side in the diameter direction of the hollow fiber membrane 12 of the membrane water purification cartridge 9, and thus air between the membrane water purification cartridge 9 and the filtering medium water purification cartridge 10 and the air contained in the filtering medium 37 can be released to an outside in the diameter direction of the hollow fiber membrane 12 without passing through the inside of the hollow fiber membrane 12. That is, because the hollow fiber membrane 12 arranged at the upstream side and the filtering medium 37 arranged at the downstream side are not overlapped in the direction of gravity, the air contained in the filtering medium 37 does not have a course which crosses through the hollow fiber membrane 12.

For such reasons, even when the membrane water purification cartridge 9 is arranged closer to the upstream side than the filtering medium water purification cartridge 10, it is unnecessary to form the membrane water purification cartridge 9 in an approximately cylinder shape. Thus, cost increase related to the production of the water purification cartridge 3 can be suppressed.

Further, compared to a case of the related art in which the membrane water purification cartridge 9 and the filtering medium water purification cartridge 10 are arranged along the vertical direction, a space for vertical direction arrangement space can be saved in the water purification cartridge 3.

Further, due to saving of a space for vertical direction arrangement space in the water purification cartridge 3, the vertical direction space of the purified water storage section 6 can be kept large without altering the whole size of the pitcher-type water purifier 1. Accordingly, water storage amount until water surface of purified water stored in the purified water storage section 6 reaches the water purification cartridge 3 can be increased. In other words, as it is possible to secure sufficient purification rate until water surface of purified water reaches the water purification cartridge 3, a conveniently usable pitcher-type water purifier 1 can be provided.

Further, as the linear velocity of the filtering medium 37 increases, the filtering medium 37 is efficiently used and the user cost can be reduced. Further, for using the hollow fiber membrane 12, when a loop shape one is adhered to a container by using a resin and then cut to give an end surface, the elongated shape one yields less portion wasted by cutting even with the same effective area, and thus the cost relating to the water purification cartridge 3 can be reduced.

Further, in the water purification cartridge 3, the first housing 11 constituting the membrane water purification cartridge 9, and the second housing 21 constituting the filtering medium water purification cartridge 10 are in a divided constitution, and thus the first housing 11 and the second housing 21 can be either integrally formed or divided. Accordingly, depending on service life of the hollow fiber membrane 12 or the filtering medium 37, each can be separately replaced. Thus, it becomes possible to suppress the management cost.

The service life of the membrane water purification unit indicates time period until the water flow rate under treatment of raw water by the membrane water purification unit decreases by 80% compared to the initial flow rate. The service life of the filtering medium water purification unit also indicates time period until the lead concentration in purified water is 0.010 mg/L or more when raw water having a lead concentration of 0.15 mg/L is treated by the filtering medium water purification unit. For example, if the service life of the hollow fiber membrane 12 as a membrane water purification unit is longer than the service life of the filtering medium 37 as a filtering medium water purification unit, it is required to replace only the filtering medium 37, and thus the maintenance and management cost related to the water purification cartridge 3 can be suppressed.

### (Second embodiment)

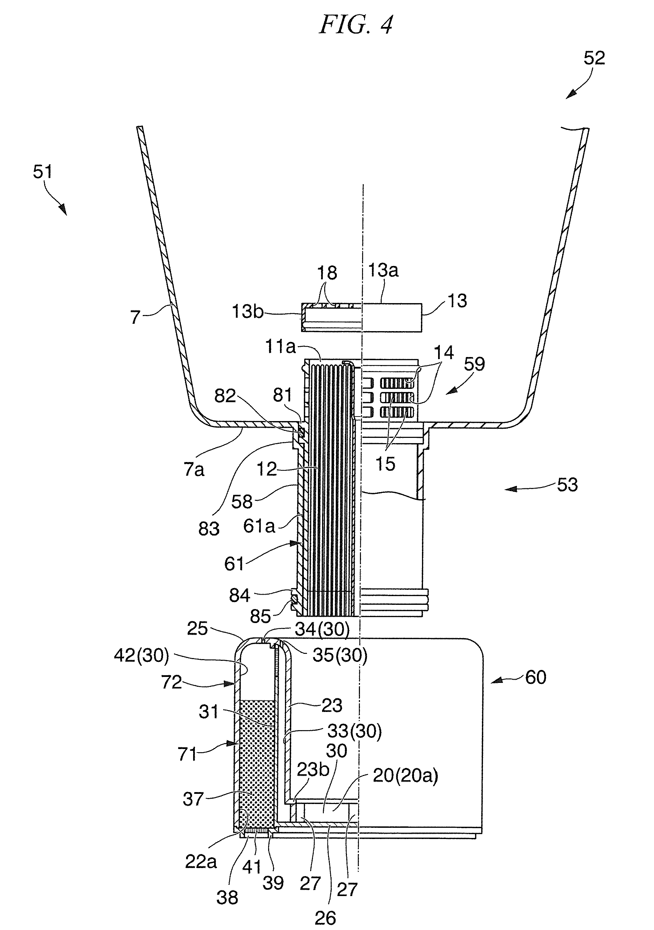

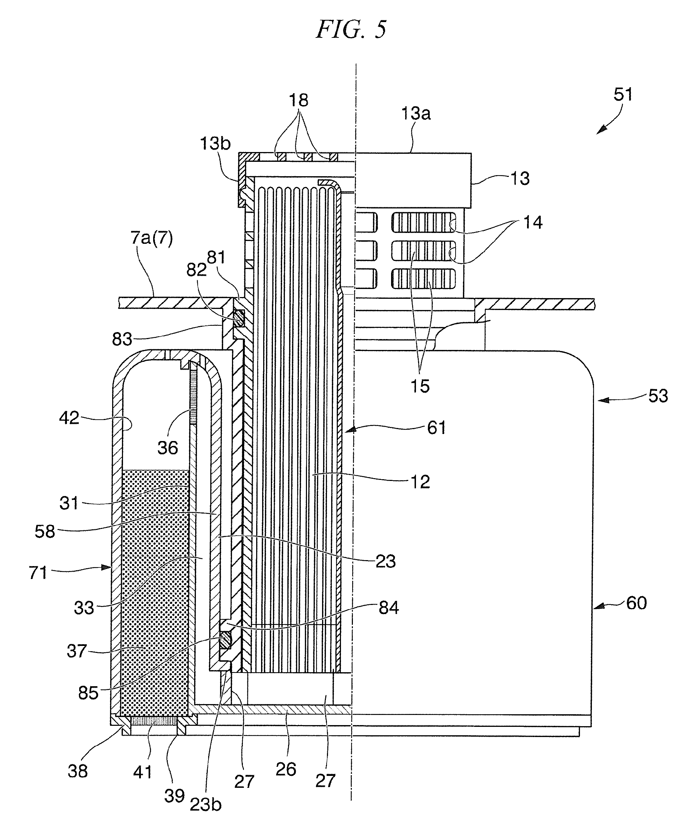

Next, a second embodiment of the invention is explained on the basis of Fig. 4 and Fig. 5.

Fig. 4 is an exploded side view of the water purification cartridge 53 according to the second embodiment, and Fig. 5 is a cross-sectional side view partially illustrating the water purification cartridge 53 according to the second embodiment. Meanwhile, the aspects that are the same as the first embodiment are explained by applying the same symbols (ditto for the following embodiments).

In the second embodiment, basic configurations including an aspect that the pitcher-type water purifier 51 is provided with the cylindrical pitcher main body 52 with a bottom and the water purification cartridge 53 which is attached in a freely removable state to the pitcher main body 52, an aspect that the pitcher main body 52 is installed with the attachment part 58 for attaching the water purification cartridge 53, an aspect that the water purification cartridge 53 has the membrane water purification cartridge 59 and the filtering medium water purification cartridge 60 that is formed to surround the membrane water purification cartridge 59 and the approximately cylindrical first housing 61 of the membrane water purification cartridge 59 and the second housing 71 of the filtering medium water purification cartridge 60 are in a divided configuration so as to allow free removal, and an aspect that the hollow fiber membrane 12 is accommodated within the first housing 61 while the filtering medium 37 is filled in the peripheral wall part 22 of the second housing 71 are the same as the first embodiment described above (ditto for the following embodiments).

Further, in the second embodiment, configurations including an aspect that the approximately cylindrical first housing 61 of the membrane water purification cartridge 59 and the second housing 71 of the filtering medium water purification cartridge 60 are in a divided configuration so as to allow free removal and an aspect that the hollow fiber membrane 12 is accommodated within the first housing 61 while the filtering medium 37 is filled in the peripheral wall part 22 of the second housing 71 are the same as the first embodiment described above.

Herein, the difference between the pitcher-type water purifier 1 according to the first embodiment and the pitcher-type water purifier 51 according to the second embodiment is that, in the water purification cartridge 3 of the pitcher-type water purifier 1 according to the first embodiment, the first housing 11 of the membrane water purification cartridge 9 is installed to the second housing 21 of filtering medium water purification cartridge 10 so as to allow free removal, while in the water purification cartridge 53 of the pitcher-type water purifier 51 according to the second embodiment, each of the first housing 61 of the membrane water purification cartridge 59 and the second housing 71 of the filtering medium water purification cartridge 60 is installed to the attachment part 58 of pitcher main body 52 so as to allow free removal.

More specifically, as illustrated in Fig. 4 and Fig. 5, the attachment part 58 installed on the pitcher main body 52 is formed in a cylinder shape with open top and open bottom. Further, the diameter of the attachment part 58 is set such that the first housing 61 can be fitted from the inside and the peripheral wall part 72 of the second housing 71 can be fitted from the outside.

Further, on the peripheral wall 61a of the first housing 61, the O ring attachment part 81 is formed over the entire periphery at a lower side of the water intake port 14 and the O ring 82 is attached thereto. Meanwhile, on the attachment part 58 of the pitcher main body 52, the diameter-increased section 83 which has increased diameter with a stepped portion is formed at a connection part to the bottom wall 7a of the partitioning section 7. The diameter-increased section 83 is formed such that the O ring attachment part 81 of the first housing 61 can be fitted from the inside. Accordingly, when the first housing 61 is fitted to the attachment part 58 from the inside, the attachment part 58 and the first housing 61 are sealed in a liquid tight manner.

Further, the vertical direction position of the first housing 61 is determined as the O ring attachment 81 abuts on the stepped portion of the diameter-increased section 83 formed on the attachment part 58. The vertical direction length of the attachment part 58 is set such that the bottom end of the attachment part 58 meets on the same plane as the bottom end of the first housing 61 when the first housing 61 is attached to the attachment part 58.

Also, in a lower part of the attachment part 58, the O ring attachment part 84 is formed and the O ring 85 is attached to the O ring attachment part 84. Accordingly, the attachment part 58 and the peripheral wall part 72 of the second housing 71 are sealed in a liquid tight manner.

Herein, the bottom end of the O ring attachment part 84 of the attachment part 58 is designed to abut on the engagement claw 23b formed on the inner peripheral wall 23, which constitutes the peripheral wall part 72 of the second housing 71. Accordingly, the position of the second housing 71 relative to the attachment part 58 is determined.

Subsequently, a method of attaching and removing the water purification cartridge 53 is explained.

First, a method of removing the membrane water purification cartridge 59 which constitutes one part of the water purification cartridge 53 is explained. In such a case, the membrane water purification cartridge 59 is inserted from the upper side of the attachment part 58. Specifically, in a state in which the bottom end of the first housing 61 faces toward the attachment part 58, the first housing 61 is inserted to the attachment part 58. Then, by bringing the O ring attachment part 81 of the first housing 61 into contact with the diameter-increased section 83 of the attachment part 58, a process of attaching the membrane water purification cartridge 59 to the pitcher main body 52 is completed.

At that time, the O ring 82 attached to the O ring attachment part 81 is slightly deformed by compression between the O ring attachment part 81 and the attachment part 58 of the pitcher main body 52, and thus liquid tightness between the attachment part 58 and the membrane water purification cartridge 59 is secured. Further, as the restoration force applied on the O ring 82 functions as a resistant force so that the easy release of the membrane water purification cartridge 59 from the attachment part 58 is prevented.

Further, to remove the membrane water purification cartridge 59 from the pitcher main body 52, a process opposite to the process of attaching the membrane water purification cartridge 59 can be carried out. That is, by extruding the membrane water purification cartridge 59 from the lower side toward the upper side, the membrane water purification cartridge 59 can be removed from the attachment part 58.

Meanwhile, a method of removing the filtering medium water purification cartridge 60 which constitutes the other part of the water purification cartridge 53 is explained. In such a case, the filtering medium water purification cartridge 60 is inserted to the attachment part 58 from the lower side. That is, toward the upper region of the end part 25 constituting the peripheral wall part 72 of the second housing 71, the second housing 71 is inserted to the attachment part 58. Then, by bringing the O ring attachment part 84 of the attachment part 58 into contact with the engagement claw 23b formed on the inner peripheral wall 23 of the peripheral wall part 72, a process of attaching the filtering medium water purification cartridge 60 is completed.

At that time, the O ring 85 attached to the O ring attachment part 84 is slightly deformed by compression between the O ring attachment part 84 of the attachment part 58 and the inner peripheral wall 23 of the peripheral wall part 72, and thus liquid tightness between the attachment part 58 and the filtering medium water purification cartridge 60 is secured. Further, as the restoration force applied on the O ring 85 functions as a resistant force so that the easy release of the filtering medium water purification cartridge 60 from the attachment part 58 is prevented.

Further, to remove the filtering medium water purification cartridge 60 from the pitcher main body 52, a process opposite to the process of attaching the filtering medium water purification cartridge 60 can be carried out. That is, by extruding the filtering medium water purification cartridge 60 from the upper side toward the lower side, the filtering medium water purification cartridge 60 can be removed from the attachment part 58.

Meanwhile, although explanations are given for the case in which the O ring 85 is used as a means for fixing the filtering medium water purification cartridge 60 to the attachment part 58, it is not limited thereto, and a screw structure or a rachet structure can be also used in addition to the O ring 85.

In other words, it is also possible that a non-illustrated male screw part is engraved on the outer peripheral surface of the attachment part 58, a non-illustrated female screw part, which can be screw-joined to the male screw part, is engraved on the inner peripheral wall 23 of the second housing 71, and the second housing 71 is screwed into the attachment part 58. By having this configuration, the release of the second housing 71 from the attachment part 58 can be more certainly prevented.

Thus, according to the second embodiment described above, in addition to have the water purification cartridge 53 with a divided configuration having the first housing 61 for constituting the membrane water purification cartridge 59 and the second housing 71 for constituting the filtering medium water purification cartridge 60, each of the first housing 61 and the second housing 71 can be freely removable from the attachment part 58 of the pitcher main body 52, and thus each of the membrane water purification cartridge 59 and the filtering medium water purification cartridge 60 can be used a separate single unit.

In other words, depending on user's need, it is possible to use the pitcher main body 52 attached only with the membrane water purification cartridge 59 or with the filtering medium water purification cartridge 60. Further, it is also possible that the membrane water purification cartridge 59 and the filtering medium water purification cartridge 60 are used in combination. Since specifications of the water purification cartridge 53 can be easily changed as described above, it is possible to provide the conveniently usable water purification cartridge 53 while the management cost for each of the water purification cartridge 59 and 60 is suppressed.

### (Third embodiment)

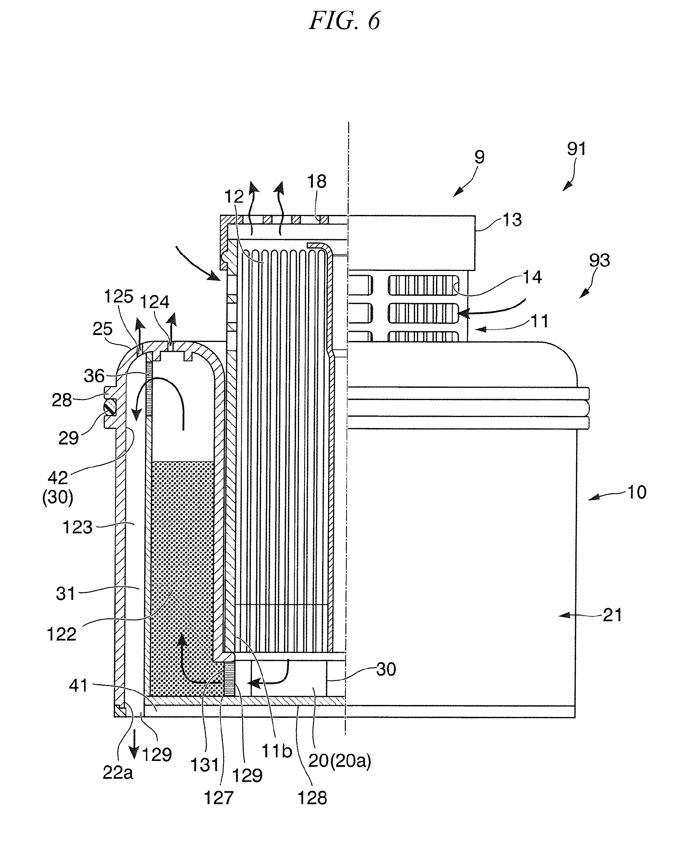

Next, a third embodiment of the invention is explained on the basis of Fig. 6.

Fig. 6 is a cross-sectional side view of a part of the water purification cartridge 93 according to the third embodiment.

As illustrated in the drawing, the difference between the pitcher-type water purifier 1 of the first embodiment and the pitcher-type water purifier 91 of the third embodiment is as described below.

That is, in the water purification cartridge 3 of the pitcher-type water purifier 1 according to the first embodiment, the partitioning cylinder 31 is installed between the inner peripheral wall 23 of the peripheral wall part 22, which constitutes the peripheral wall part 22 of the second housing 21, and the outer peripheral wall 24, and the filtering medium accommodating section 32 for filling the filtering medium 37 is formed by the partitioning cylinder 31, the outer peripheral wall 24, and the end part 25, and also the second flow path 33 as a flow path for water for treatment is formed by the partitioning cylinder 31, the inner peripheral wall 23, and the end part 25. In other words, the filtering medium accommodating section 32 is arranged at the outer side of the diameter direction of the peripheral wall part 22, and the second flow path 33 is arranged at the inner side of the diameter direction of the filtering medium accommodating section 32.

On the other hand, as for the pitcher-type water purifier 91 of the third embodiment, it is the same as the first embodiment in that the partitioning cylinder 31 is installed between the inner peripheral wall 23, which constitutes the peripheral wall part 22 of the second housing 21, and the outer peripheral wall 24, but the filtering medium accommodating section 122 is arranged at the inner side of the diameter direction of the peripheral wall part 22 and the second flow path 123 is arranged at the outer side of the diameter direction of the filtering medium accommodating section 122.

More specifically, the partitioning cylinder 31 of the third embodiment is arranged between the inner peripheral wall 23 of the peripheral wall part 22 and the outer peripheral wall 24 and also near the outer peripheral wall 24. Further, the bottom wall 128 of the second housing 21 is formed such that this outer peripheral edge is connected to the partitioning cylinder 31. In addition, the filtering medium accommodating section 122 is formed by the partitioning cylinder 31, the inner peripheral wall 23, the end part 25, and the bottom wall 128, and the second flow path 123 is formed by the partitioning cylinder 31, the outer peripheral wall 24, and the end part 25.

Further, on the bottom wall 26 of the second housing 21 according to the third embodiment, the ring shape partition wall 127 is installed on an area corresponding to the inner peripheral wall 23, instead of the plural column 27 of the first embodiment. The partition wall 127 plays a role of partitioning the filtering medium accommodating section 122 and the first flow path 20a. Further, by the partition wall 127, the filtering medium 37 filled in the filtering medium accommodating section 122 is kept from releasing to the first flow path 20a side.

Further, on the partition wall 127, plural water ports 129 are formed, and the mesh sheet 131 is installed on the water port 129. Accordingly, water for treatment flows from the first flow path 20a to the filtering medium accommodating section 122 via the water port 129.

Furthermore, in the end part 25 of the second housing 21, the air release holes 124 and 125 are formed on an area corresponding to the filtering medium accommodating section 122 and an area corresponding to the second flow path 123, respectively. Accordingly, water for treatment can be smoothly introduced to the filtering medium accommodating section 122 and the second flow path 123. Herein, since the water discharge port 129 is formed between the opening part 22a of the second housing 21 at the lower side of the second flow path 123 and the partitioning cylinder 31, it is unnecessary to form the air release hole 125 on an area corresponding to the second flow path 123 of the end part 25.

Under such a configuration, water for treatment discharged from the bottom opening 11b of the first housing 11 flows into the first flow path 20a, and the water for treatment is introduced to the filtering medium accommodating section 122 via the water port 129. At that time, the air contained in the filtering medium 37 is discharged via the air release hole 124.

Subsequently, the water for treatment flows from the filtering medium accommodating section 122 to the second flow path 123 via the passing port 36 formed on the partitioning cylinder 31. Further, purified water is discharged from the water discharge port 129 between the opening part 22a of the second housing 21 and the partitioning cylinder 31, and then stored in the purified water storage section 6.

Thus, according to the third embodiment described above, the same effect as the first embodiment described above can be exhibited. Further, depending on specifications, the use of the water purification cartridge 3 of the first embodiment or the water purification cartridge 93 of the third embodiment can be selectively made, and thus it is possible to provide the user friendly pitcher-type water purifiers 1 and 91.

### (Fourth embodiment)

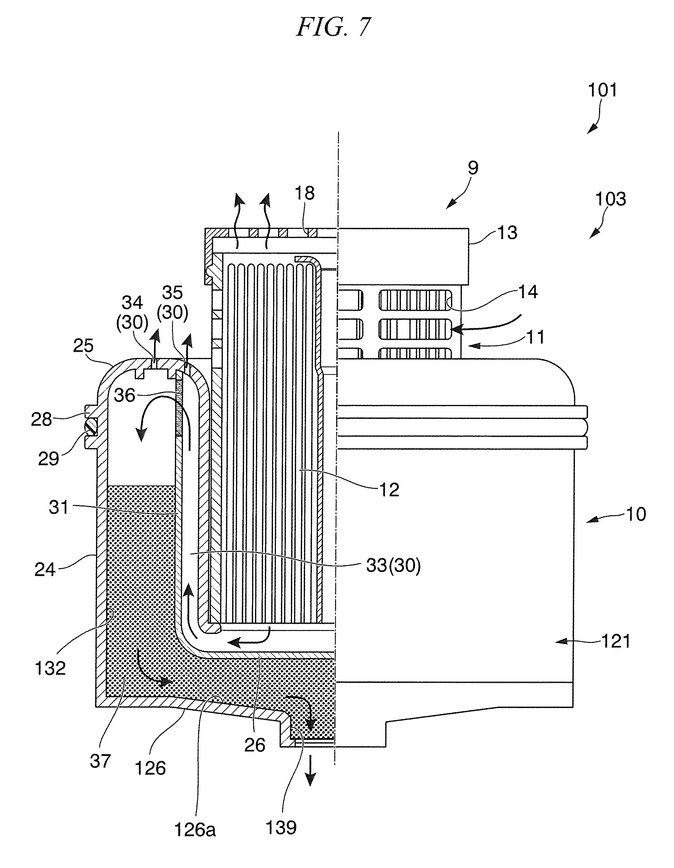

Next, a fourth embodiment of the invention is explained on the basis of Fig. 7.

Fig. 7 is a cross-sectional side view of a part of the water purification cartridge 103 according to the fourth embodiment.

As illustrating in the drawing, the difference between the pitcher-type water purifier 1 of the first embodiment and the pitcher-type water purifier 101 of the fourth embodiment is as described below.

That is, in the water purification cartridge 3 of the pitcher-type water purifier 1 according to the first embodiment, the partitioning cylinder 31 is installed between the inner peripheral wall 23 of the peripheral wall part 22, which constitutes the peripheral wall part 22 of the second housing 21, and the outer peripheral wall 24, and the filtering medium accommodating section 32 for filling the filtering medium 37 is formed by the partitioning cylinder 31, the outer peripheral wall 24, and the end part 25, but in the water purification cartridge 103 of the pitcher-type water purifier 101 according to the fourth embodiment, the filtering medium accommodating section 132 is formed not only in the peripheral wall part 22 but also in a lower part of the bottom wall 26 of the second housing 121.

Mores specific explanations are as follows.

The bottom end of the outer peripheral wall 24 of the second housing 21 extends toward the downward side of the bottom wall 26. Further, in the bottom end of the outer peripheral wall 24, the bottom cover 126 is integrally formed to cover the lower part of the bottom wall 26. Accordingly, the filtering medium accommodating section 132 is also formed between the bottom cover 126 and the bottom wall 26. That is, the filtering medium accommodating section 132 is formed in an approximately cylinder shape to surround the bottom wall 26 and the neighbor of the partitioning cylinder 31.

Further, the bottom cover 126 is formed to have a swelling toward the downward direction along facing the middle in the diameter direction. Thus, on the filtering medium accommodating section 132, the water gradient part 126a toward the middle of the diameter direction is formed by the bottom cover 126.

Further, on an almost middle part of the diameter direction of the bottom cover 126, the drain port 139 is formed. Herein, although the drain port 39 of the first embodiment mentioned above is formed in an approximately ring shape to follow the outer periphery of the water purification cartridge 3, the drain port 139 of the fourth embodiment has a circular arc shape in cross section as it is formed on an almost middle part of the diameter direction of the bottom cover 126.

Under such a configuration, water for treatment introduced from the second flow path 33 to the filtering medium accommodating section 132 via the passing port 36 bypasses to the lower side of the bottom wall 26 and discharged from the drain port 139, which is formed on an almost middle part of the diameter direction of the water purification cartridge 103.

Thus, according to the fourth embodiment described above, the filtering medium accommodating section 132 is formed in an approximately cylinder shape having a bottom to surround the bottom wall 26 and the neighbor of the partitioning cylinder 31 so that the flow path of the filtering medium 37 through which water for treatment passes can be elongated. Accordingly, the filtration performance of the water purification cartridge 103 is improved and also the service life of the filtering medium 37 can be extended.

Further, by forming drain port 139 on an almost middle part of the diameter direction of the bottom cover 126, the drain port 139 can have a smaller opening area than the opening area of the drain port 39 of the first embodiment. For such a case, it is possible to suppress an occurrence of back-contamination through the drain port 139. Further, for a case in which a mesh sheet or a non-woven fabric is installed on the drain port 139, the production cost can be reduced as the opening area of the drain port 139 becomes small.

Further, compared to a case in which the drain port having the same circular arc shape in cross section is arranged near the outer periphery of the water purification cartridge 103, the filtering medium 37 can be used without any bias. Further, by having the drain port 139 at single position, clean flowing appearance can be obtained.

### (Fifth embodiment)

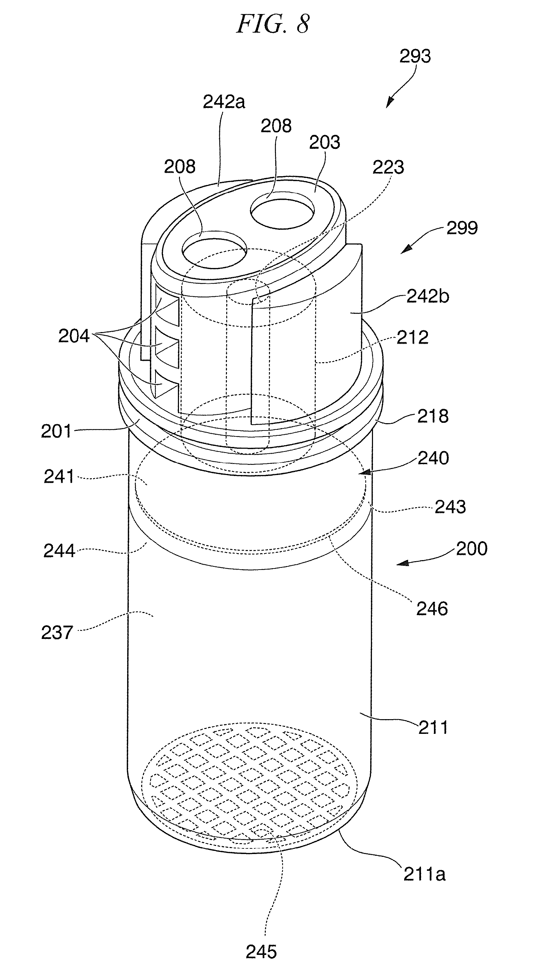

Next, a fifth embodiment of the invention is explained on the basis of Fig. 8.

Fig. 8 is a perspective view of the water purification cartridge 293 according to the fifth embodiment.

Herein, the difference between the water purification cartridge 3 of the first embodiment and the water purification cartridge 293 of the fifth embodiment is as follows. While in the water purification cartridge 3 of the first embodiment, the filtering medium water purification cartridge 10 is installed to surround the periphery of the membrane water purification cartridge 9, in the water purification cartridge 293 of the fifth embodiment, the membrane water purification cartridge 299 and the filtering medium water purification cartridge 200 are arranged in series in vertical direction.

As illustrated in Fig. 8, in the membrane water purification cartridge 299, the hollow fiber membrane 212 is accommodated in the approximately cylindrical first housing 201 having openings at both the top and bottom ends and the top opening is closed by the housing cover 203.

On the periphery wall of the first housing 201, the water intake port 204 is formed such that it is arranged at both sides having the middle in the diameter direction at the center and also arranged in three rows along the vertical direction. The water intake port 204 is to introduce water for treatment to the first housing 201. Further, at the bottom end of the first housing 201, a spigot part allowing spigot fitting to the holder 240 described below is formed.

The housing cover 203 is formed in an approximately disc shape to cover the top opening of the first housing 201. On the housing cover 203, two air release holes 208 are formed. The air discharged from the side of the hollow fiber membrane 212 is to be released via the air release holes 208.

The hollow fiber membrane 212 accommodated in the first housing 201 is integrally formed by the potting part filled between end parts, while maintaining its opening in a curved state with a U-shape. Further, the hollow fiber membrane 212 is fixed in a state in which the potting part is arranged on the bottom opening of the first housing 201. Further, in the hollow fiber membrane 212, the air outlet 223 which penetrates in vertical direction in the middle of the diameter direction is installed. The outlet 223 is to release the air discharged from the filtering medium water purification cartridge 200.

Herein, the first housing 201 is connected to the filtering medium water purification cartridge 200 via the holder 240.

The holder 240 is provided with an approximately cylindrical holder main body 241 having openings at both ends. Further, on the top opening of the holder main body 241, the spigot part formed at the bottom of the first housing 201 is fitted by spigot insertion.

On the top periphery of the holder main body 241, the O ring attachment part 218 is formed along the entire periphery, and the non-illustrated O-ring is attached thereto. For example, the O ring attachment part 218 is a part to be fitted to the attachment part 8 when the water purification cartridge 293 is attached to the attachment part 8 of the pitcher main body 2 (see, Fig. 1). Further, when the water purification cartridge 293 is attached to the attachment part 8, the non-illustrated O ring, which is attached to the O ring attachment part 218, undergoes a slight deformation between the attachment part 8 of the pitcher main body 2 and the O ring attachment part 218 of the holder 240, and as a result, the attachment part 8 and water purification cartridge 293 are sealed in a liquid tight manner.

Further, in the holder main body 241, a pair of the support walls 242a and 242b is formed vertically from the top of the O ring attachment part 218. The support wall 242a and 242b are formed in a curved shape to correspond to the peripheral wall of the first housing 201. Further, the pair of the support walls 242a and 242b is oppositely disposed having the middle of the diameter direction of the holder main body 241 at the center. Accordingly, the first housing 201 can be surely supported. Further, on the bottom opening of the holder main body 241, the fitting part 243 in which inner periphery surface has enlarged diameter by a stepped portion is formed. The fitting part 243 is to connect the holder main body 241 to the filtering medium water purification cartridge 200.

The filtering medium water purification cartridge 200 has the approximately cylindrical the second housing 211 having a bottom. On the opening of the second housing 211, the fitting part 244 in which outer periphery surface has reduced diameter by a stepped portion is formed. As the fitting part 244 fits into the fitting part 243 of the holder main body 241, the second housing 211 and the holder 240 are formed integrally.

The filtering medium 237 is filled in the second housing 211. Further, on the bottom wall 211a of the second housing 211, plural water drain ports 245 are formed and the water drain ports 245 are covered with a non-illustrated mesh sheet. Accordingly, the release of the filtering medium 237 to an outside through the water drain port 245 is prevented and discharging the treated water from the water drain port 245 to the purified water storage section 6 can be achieved (see, Fig. 1).

Herein, between the holder 240 and the second housing 211, the partitioning plate 246 is installed. More specifically, the partitioning plate 246 is formed in an approximately disc shape so that it can be fitted to the fitting part 243 of the holder main body 241. Further, by the fitting part 243 of the holder main body 241 and the cross section at the opening side of the second housing 211, the partitioning plate is present in a state of being sandwiched from the vertical direction.

In addition, on the partitioning plate 246, plural communication holes are formed (not illustrated). The size of the plural communication holes is set to allow the water for treatment to pass but not the filtering medium 237.

Subsequently, a method for assembling the water purification cartridge 299 is explained.

First, the hollow fiber membrane 212 is attached in advance to the first housing 201, and the filtering medium 237 is filled in the second housing 211. In addition, the holder 240 is attached to the second housing 211. At that time, a partitioning plate is arranged between the second housing 211 and the holder 240, and the holder 240 is attached by fitting the fitting part 243 of the holder 240 to the fitting part 244 of the second housing 211.

Subsequently, the first housing 201 is attached to the holder 240 and the membrane water purification cartridge 299 and the filtering medium water purification cartridge 200 are formed integrally via the holder 240. Accordingly, the water purification cartridge 299 is completely assembled.

Herein, by attaching in advance the partitioning plate 246 to an end surface of the opening side of the second housing 211 before attaching the first housing 201 to the second housing 211 via the holder 240, the release of the filtering material 237 from the second housing 211 can be prevented.

Thus, according to the fifth embodiment described above, in the water purification cartridge 293 in which the filtering medium water purification cartridge 200 is arranged in series closer to the downstream side than the membrane water purification cartridge 299, by attaching the partitioning plate 246 to an end surface of the opening of the second housing 211, the release of the filtering material 237 from the second housing 211 can be prevented, and thus it is possible to prevent the filtering medium 237 from flowing into the hollow fiber membrane 212 during its distribution. Further, the filtering medium water purification cartridge 200 can be distributed singly. Further, the membrane water purification cartridge 299 can be also distributed singly.

Accordingly, each of the membrane water purification cartridge 299 and the filtering medium water purification cartridge 200 can be prepared separately depending on the service life of the hollow fiber membrane 212 and the filtering medium 237. As a result, the maintenance and management cost of the water purification cartridge 293 can be reduced.

Meanwhile, the invention is not limited to the embodiments described above, and within the range that does not depart from the spirit of the invention, various modification made to the above embodiments are also included.

For example, in the first embodiment described above, the pitcher-type water purifier 1 attached with the water purification cartridge 3 was explained, and in the second embodiment, the pitcher-type water purifier 51 attached with the water purification cartridge 53 was explained. However, it is possible that the water purification cartridge 3 and 53 can be utilized for various water purifiers other than the pitcher-type water purifier 1 and 51.

Further, in the fifth embodiment described above, the attachment part 8 of the pitcher main body 2 (see, Fig. 1) attached with the water purification cartridge 293 was explained. However, the water purification cartridge 3, 53, and 293 can be attached to various water purifiers.

Further, in the embodiments described above, a case in which the water intake port 14 is formed on top part of the first housing 11 and 61 such that it is arranged equidistantly along the peripheral direction and also arranged in three rows along the vertical direction is explained. However, it is not limited to such a case, and formation number, position for formation, arrangement pattern, or the like of the water intake port 14 can be suitably changed.

Further, in the first embodiment and the second embodiment described above, a case in which the water intake port 14 is formed on top part of the first housing 11 and 61 such that it is arranged equidistantly along the peripheral direction and also arranged in three rows along the vertical direction is explained. Further, in the fifth embodiment described above, a case in which the water intake port 204 is formed on the peripheral wall of the first housing 201 such that it is arranged at both sides having the middle in the diameter direction at the center and also arranged in three rows along the vertical direction is explained. However, it is not limited to such cases, and formation number, position for formation, arrangement pattern, or the like of the formed water intake port 214 and 204 can be suitably changed.

### INDUSTRIAL APPLICABILITY

The invention can provide a water purification cartridge and a pitcher-type water purifier enabling suppressing a production cost increase even when the membrane water purification unit is arranged closer to the upstream side than the filtering-material water purification unit.

It is also possible to provide a conveniently usable water purification cartridge and a pitcher-type water purifier enabling maintenance and management cost to be reduced.

### EXPLANATIONS OF NUMERALS

1,51,91, 101 Pitcher-type water purifier
2, 52 Pitcher main body
3, 53, 93, 103 Water purification cartridge
8, 58 Attachment part
9, 59 Membrane water purification cartridge
10, 60 Filtering medium water purification cartridge
11, 61 First housing (membrane side housing)
12 Hollow fiber membrane (membrane water purification unit)
20 Clearance
20a First flow path
21, 71, 121 Second housing (filtering medium housing)
221, 271, 211 Second housing (filtering medium housing)
30 Air outlet
33, 123 Second flow path
34, 35, 124, 125 Air release hole
37 Filtering medium (filtering medium water purification unit)
42 Air retention portion
139 Drain port
246 Partitioning plate

## Claims

1. A water purification cartridge comprising:
a membrane side housing for accommodating a membrane water purification unit, and
a filtering medium side housing for accommodating a filtering medium water purification unit,
wherein the membrane side housing and the filtering medium side housing are freely removable.

2. The water purification cartridge according to claim 1,
wherein the membrane side housing and the filtering medium side housing are freely removable from a pitcher main body.

3. The water purification cartridge according to claim 2,
wherein the membrane water purification unit and the filtering medium water purification unit are arranged in series and a partitioning plate for partitioning the membrane water purification unit and the filtering medium water purification unit and also for preventing removal of the filtering medium water purification unit from the filtering medium side housing is installed between the membrane water purification unit and the filtering medium water purification unit.

4. The water purification cartridge according to any one of claims 1 to 3,
wherein an ion exchanger is used for the filtering medium water purification unit.

5. The water purification cartridge according to claim 4,
wherein the ion exchanger is an H type cation exchange resin.

6. The water purification cartridge according to any one of claims 1 to 5,
wherein the filtering medium water purification unit is arranged closer to the downstream side than the membrane water purification unit for a case in which a pH of raw water is higher than 8 and a pH of water for treatment by the filtering medium water purification unit is 8 or lower.

7. The water purification cartridge according to any one of claims 1 to 3,
wherein a chelate resin is used for the filtering medium water purification unit.

8. The water purification cartridge according to any one of claims 1 to 5 or 7,
wherein the filtering medium water purification unit is arranged closer to the downstream side than the membrane water purification unit.

9. The water purification cartridge according to claim 8,
wherein at least part of the filtering medium water purification unit is protruded to an outer side than the outermost part in a horizontal direction that is perpendicular to the direction of gravity in the membrane water purification unit.

10. The water purification cartridge according to claim 9,
wherein the membrane water purification unit and the filtering medium water purification unit are arranged in series such that a cross section perpendicular to a length direction has a concentric circle shape.

11. The water purification cartridge according to any one of claims 8 to 10,
wherein the membrane water purification unit is formed in an approximately column shape, the filtering medium water purification unit is arranged on an outer side in the horizontal direction of the membrane water purification unit, and an air outlet is installed between the membrane water purification unit and the filtering medium water purification unit.

12. The water purification cartridge according to any one of claims 8 to 11,
wherein the filtering medium water purification unit is arranged so as to surround the outer periphery and bottom part of the membrane water purification unit.

13. The water purification cartridge according to claim 12,
wherein a drain port for discharging water for treatment is installed at the middle in the diameter direction of the filtering medium water purification unit.

14. The water purification cartridge according to any one of claims 1 to 13,
wherein the filtering medium water purification unit has longer service life than the membrane water purification unit.

15. A pitcher-type water purifier equipped with the water purification cartridge described in any one of claims 1 to 14.
